# EUROPEAN PATENT SPECIFICATION

(11) **EP 2 900 020 B1**
(45) Date of publication and mention of the grant of the patent: **06.12.2017**
(21) Application number: 15159591.5
(22) Date of filing: 27.10.2010
(51) Int. Cl.: H04W 52/04, H04W 52/44, H04W 52/02

(54) **Power-saving method and system**
Stromsparendes Verfahren und System
Procédé et système d'économie d'énergie

(30) Priority: 27.10.2009 CN 200910110376
(43) Date of publication of application: 29.07.2015
(62) Divisional of application: 10826080.3
(73) Proprietor: Huawei Technologies Co., Ltd., Longgang District Shenzhen, Guangdong 518129 (CN)
(72) Inventor: Xu, Ying, Shenzhen Guangdong 518129 (CN); Gu, Weidong, Shenzhen Guangdong 518129 (CN)
(74) Representative: Körber, Martin Hans

(56) References cited:
- WO-A1-2008/084623
- WO-A1-2009/041871

## Description

### FIELD OF THE INVENTION

The present invention relates to the field of communications, and in particular, to an energy-saving method, an energy-saving system, and a base station.

### BACKGROUND OF THE INVENTION

In an LTE (Long Term Evolution, long term evolution) system, an OFDM (Orthogonal Frequency Division Multiplex, orthogonal frequency division multiplex) technology is introduced, and meanwhile, two basic working modes are supported, that is, frequency division duplexing (Frequency Division Duplexing, FDD) and time division duplexing (Time Division Duplexing, TDD). A typical LTE radio frame is formed by 20 timeslots, where a length of each timeslot is 0.5 ms, and two adjacent timeslots form a subframe, and therefore, an LTE radio frame has 10 subframes in total. In a downlink subframe of the LTE, when a conventional cyclic prefix (Cyclic Prefix, CP) is used, a timeslot includes 7 OFDM symbols. Therefore, from the perspective of a time domain, each subframe includes 14 OFDM symbols, and each symbol occupies 1/14 ms. Content carried in the downlink subframe includes: a pilot, a traffic channel, a synchronization channel, such as a PSCH (Primary Synchronization Channel, primary synchronization channel) and an SSCH (Secondary Synchronization Channel, secondary synchronization channel), a broadcast channel, such as a BCH (Broadcast Channel), and a control channel, such as a PCFICH (Physical Control Format Indicator Channel, physical control format indicator channel), a PHICH (Physical Hybrid Automatic Repeat Request Indicator Channel, physical hybrid automatic repeat request indicator channel), and a PDCCH (Physical Downlink Control Channel, physical downlink control channel).

In the prior art, a method for sending a downlink subframe tends to cause an energy waste. WO 2009/041871 A1 discloses that the first node is allowed to autonomously decide to vary the number of available down link sub-frames used for down link traffic in said down link radio frames and also to vary the content of the down link sub frames which are used, said decision being valid for a time which is specified by the first node.

### SUMMARY OF THE INVENTION

An aspect of the present invention provides an energy-saving method, including:
receiving, by a baseband subsystem, a downlink subframe that is scheduled by a layer 2;
performing, by the baseband subsystem, baseband processing on the downlink subframe;
shutting down or decreasing, by the baseband subsystem or by an intermediate-frequency radio-frequency subsystem, power of a transmitting channel corresponding to an Orthogonal Frequency Division Multiplex, OFDM, symbol when judging no actual content is carried on the OFDM symbol in the downlink subframe;
wherein the actual content comprises service data, pilot data and channel data.

Another aspect of the present invention provides an energy-saving system, including:
a baseband subsystem comprising means for receiving a downlink subframe that is scheduled by a layer 2 and performing baseband processing on the downlink subframe; and
means for shutting down or decreasing power of a transmitting channel corresponding to an Orthogonal Frequency Division Multiplex, OFDM, symbol when judging no actual content is carried on the OFDM symbol in the downlink subframe wherein the means for shutting down or decreasing the power of the transmitting channel corresponding to the OFDM symbol are located in the baseband subsystem or in an intermediate-frequency radio-frequency subsystem;
wherein the actual content comprises service data, pilot data and channel data.

Another aspect of the present invention provides a base station. The base station is configured to, when no actual content is carried on an OFDM symbol in a subframe in an LTE system, shut down a transmitting channel that is corresponding to the OFDM symbol or decrease power of the transmitting channel that is corresponding to the OFDM symbol.

It can be seen from the preceding that, a symbol that carries actual content is distinguished from a symbol that carries no content; and for the symbol that carries no content, power of a transmitting channel at the time corresponding to the symbol is decreased, or the transmitting channel at the time corresponding to the symbol is shut down. In this way, energy consumption of the system may be saved.

### BRIEF DESCRIPTION OF THE DRAWINGS

FIG. 1 is a schematic flowchart of an energy-saving method according to an embodiment of the present invention;
FIG. 2 is a schematic diagram of a scenario according to an embodiment of the present invention;
FIG. 3 is a schematic flowchart of an energy-saving method according to another embodiment of the present invention;
FIG. 4 is a schematic structural diagram of an energy-saving system according to another embodiment of the present invention; and
FIG. 5 is a schematic structural diagram of a base station according to another embodiment of the present invention.

### DETAILED DESCRIPTION OF THE EMBODIMENTS

An embodiment of the present invention provides an energy-saving method, including: when no actual content is carried on an OFDM symbol in a subframe in an LTE system, decreasing power of a transmitting channel that is corresponding to a no-load symbol, or shutting down the transmitting channel. The no-load symbol may be a symbol that carries no actual content in a subframe. In the LTE system, each frame may have 10 subframes, and each subframe may have 14 OFDM symbols. In this way, each frame has 140 OFDM symbols in total. Some of these symbols may carry no actual content, and transmitting channels at the time corresponding to these symbols may be shut down, or power of the transmitting channels may be decreased, and in this way, energy consumption may be saved when the system is idle.

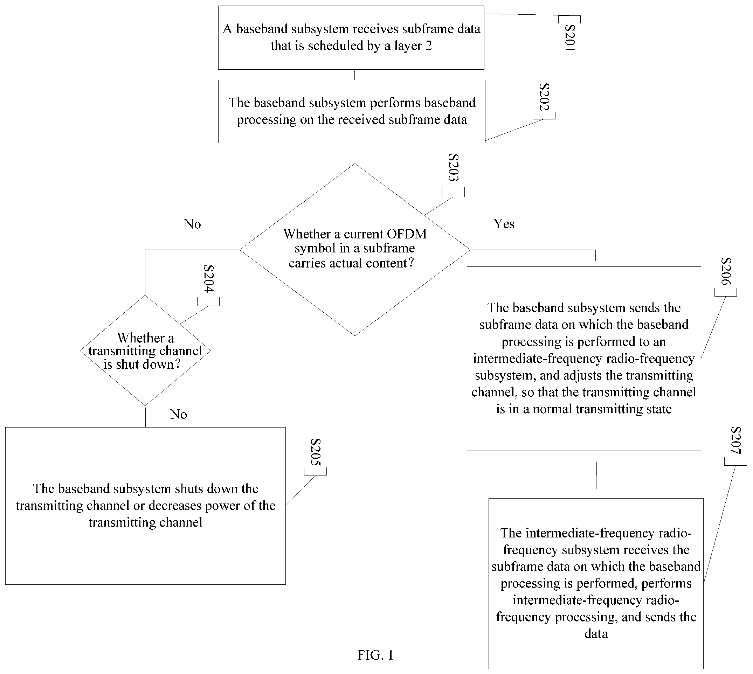

Taking an LTE FDD system as an example, another embodiment of the present invention provides an energy-saving method. As shown in FIG. 1, the method includes the following steps.

S201: A baseband subsystem receives subframe data that is scheduled by a layer 2.

The layer 2 may schedule LTE subframe data on various kinds of channels, such as a PDCCH, a PHICH, and a PBCH (Physical Broadcast Channel, physical broadcast channel). Through an interface between the layer 2 and a baseband, the baseband subsystem receives scheduled subframe data that is sent by a layer 2 subsystem.

S202: The baseband subsystem performs baseband processing on the received subframe data.

The baseband subsystem performs a series of baseband processing, such as CRC (cyclic redundancy check, cyclic redundancy check), modulation, coding, and framing, on the received LTE subframe data. Furthermore, the baseband subsystem may further perform other additional or simplified processing on the subframe data, which is not intended to limit the present invention.

S203: The baseband subsystem judges whether a current OFDM symbol in a subframe carries actual content.

When a system load is light, some symbols in a certain subframe may carry no actual content. Specifically, some symbols on a certain subframe may carry no service data, such as user voice service data or data that is generated by browsing the web, and also carry no other pilot data or channel data. Furthermore, when whether a symbol carries actual content is judged, a judgment criteria may further include judging based on other data or signaling, for example, judge whether some data or signaling that imposes a substantial impact on stable running of the system, and user access and use is carried.

In this embodiment, the baseband subsystem judges whether the current OFDM symbol in this sub frame carries any one of the following: service data, pilot data, synchronization channel data, broadcast channel data, and control channel data. If the current OFDM symbol in this subframe carries none of the following: service data, pilot data, synchronization channel data, broadcast channel data, and control channel data, it is determined that the current OFDM symbol in this subframe carries no actual content, and at this time, proceed to S204.

In another embodiment of the present invention, if a symbol carries service data that needs to be sent, or, if a symbol carries no service data that needs to be sent but the symbol carries pilot data, or synchronization channel data, or broadcast channel data, or control channel data, it is determined that the current OFDM symbol in this subframe carries actual content. To ensure normal access and stable running of the system, the OFDM symbol still needs to be processed and sent according to a normal procedure, namely, proceed to S206.

S204: The baseband subsystem judges whether a transmitting channel is shut down.

If a symbol carries no actual content, at this time, whether a transmitting channel at the time corresponding to the symbol is shut down may be further judged. If the transmitting channel is not shut down at this time, proceed to S205. If the transmitting channel has been shut down, further processing may not be performed.

In another embodiment of the present invention, the judgment in S204 may not be performed. That is, S205 is performed no matter whether the current transmitting channel is shut down.

S205: The baseband subsystem shuts down the transmitting channel or decreases power of the transmitting channel.

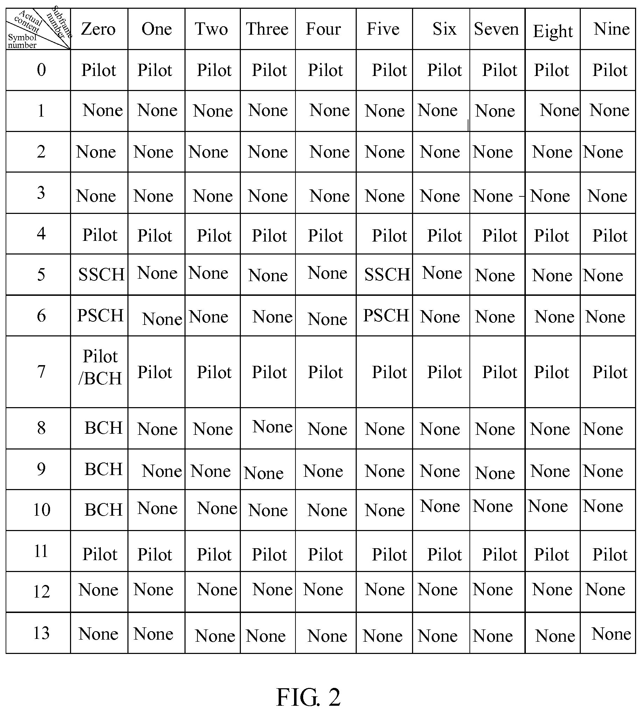

When a symbol carries no actual content, the baseband subsystem may send a signal for shutting down a transmitting channel to shut down the transmitting channel; or, may not shut down the transmitting channel completely, but send a signal for decreasing power of the transmitting channel to decrease the power of the transmitting channel. There may be many manners for shutting down the transmitting channel or decreasing the power of the transmitting channel, for example, shutting down a power amplifier at the time corresponding to the symbol or decreasing power of the power amplifier, or shutting down an intermediate frequency at the time corresponding to the symbol or decreasing power of the intermediate frequency partly, or shutting down a radio frequency at the time corresponding to the symbol or decreasing power of the radio frequency partly, or any combination of the preceding manners, which is not intended to limit the present invention. In this embodiment, a symbol that carries actual content is distinguished from a symbol that carries no content; for the symbol that carries no content, power of a transmitting channel at the time corresponding to the symbol is decreased, or the transmitting channel at the time corresponding to the symbol is shut down. In this way, energy consumption of a system may be saved. As shown in FIG. 2, in a scenario where part of OFDM symbols in one LTE frame carry actual content, columns 0 to 9 represent 10 subframes in one LTE frame; and rows 0 to 13 represent 14 OFDM symbols in a time domain. In this way, in 140 symbols in each LTE frame, 93 symbols do not need to transmit any content, which accounts for 66.4% of the total number of symbols. Power consumption of a base station may be reduced significantly by shutting down transmitting channels at the time corresponding to these symbols or decreasing power of the transmitting channels. In addition, in an LTE TDD system, energy consumption of the system may also be saved with reference to the method described in the preceding.

S206: The baseband subsystem sends the subframe data on which the baseband processing is performed to an intermediate-frequency radio-frequency subsystem, and adjusts the transmitting channel, so that the transmitting channel is in a normal transmitting state. The procedure proceeds to S207.

If the current OFDM symbol carries actual content, at this time, the baseband subsystem may transmit processed subframe data to the intermediate-frequency radio-frequency subsystem. If the current transmitting channel has been shut down or power of the current transmitting channel is decreased, the transmitting channel is adjusted, so that the transmitting channel is in a normal transmitting state, and in this way, content carried on the current OFDM symbol can be transmitted normally. Definitely, if the current transmitting channel is in a normally transmissible state, the processed subframe data may be sent to the intermediate-frequency radio-frequency subsystem directly.

S207: The intermediate-frequency radio-frequency subsystem receives the subframe data on which the baseband processing is performed, performs intermediate-frequency radio-frequency processing, and sends the data.

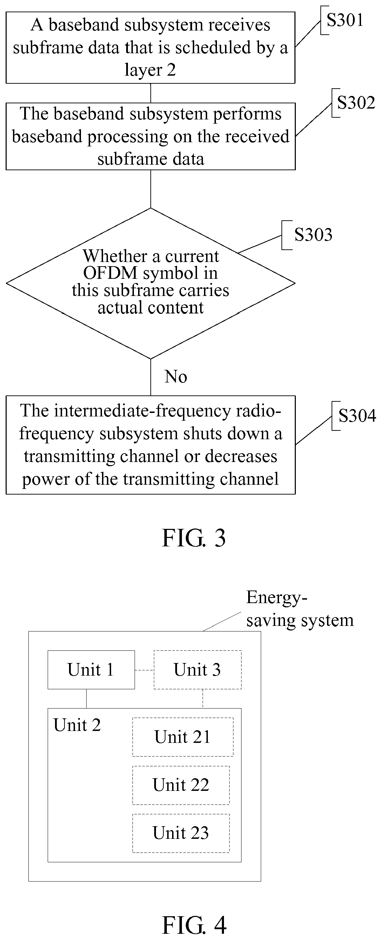

Another embodiment of the present invention further provides an energy-saving method. As shown in FIG. 3, the method includes:
S301: A baseband subsystem receives subframe data that is scheduled by a layer 2.

The layer 2 may schedule subframe data on various kinds of channels, such as a PDCCH, a PHICH, and a PBCH. Through an interface between the layer 2 and a baseband, the baseband subsystem receives subframe data that is scheduled by a layer 2 subsystem.

S302: The baseband subsystem performs baseband processing on the received subframe data.

The baseband subsystem performs a series of baseband processing, such as error correction, modulation, and coding, on the received subframe data.

S303: The baseband subsystem judges whether a current OFDM symbol in this subframe carries actual content.

The baseband subsystem judges whether the current OFDM symbol in this subframe carries any one of the following: service data, pilot data, synchronization channel data, broadcast channel data, and control channel data. If the current OFDM symbol in this subframe carries none of the following: service data, pilot data, synchronization channel data, broadcast channel data, and control channel data, it is determined that the current OFDM symbol in this subframe carries no actual content. At this time, the baseband subsystem sends processed subframe data and a judgment result to an intermediate-frequency radio-frequency subsystem. The procedure proceeds to S304.

S304: The intermediate-frequency radio-frequency subsystem shuts down a transmitting channel or decreases power of the transmitting channel.

The intermediate-frequency radio-frequency subsystem receives the processed subframe data that is sent by the baseband and a result of judging whether the current OFDM symbol in the subframe carries actual content. What is different from the preceding embodiment is that, in this embodiment, when the judgment result in S303 is that the current OFDM symbol in this subframe carries none of the following: service data, pilot data, synchronization channel data, broadcast channel data, and control channel data, namely, when the current OFDM symbol includes no actual content, the intermediate-frequency radio-frequency subsystem may send a signal for shutting down a transmitting channel to shut down the transmitting channel; or, may not shut down the transmitting channel completely, but send a signal for decreasing power of the transmitting channel to decrease the power of the transmitting channel. In another embodiment, whether the transmitting channel is shut down may further be judged before S304. If the transmitting channel is not shut down, proceed to S304; and if the transmitting channel has been shut down, processing may not be performed.

In this embodiment, a symbol that carries actual content is distinguished from a symbol that carries no content; for the symbol that carries no content, power of a transmitting channel at the time corresponding to the symbol is decreased, or the transmitting power at the time corresponding to the symbol is shut down. In this way, energy consumption of a system may be saved.

Another embodiment of the present invention further provides an energy-saving system. As shown in FIG. 4, the system includes a unit 1 and a unit 2.

The unit 1 is configured to judge whether a current OFDM symbol in a subframe in an LTE system carries actual content. When a system load is light, some symbols in a certain subframe may carry no service data, such as user voice service data or data that is generated by browsing the web, and also carry no other pilot data or channel data. Therefore, in this embodiment, the unit 1 may judge whether an OFDM symbol corresponding to the current time in a certain subframe includes any service data, or other pilot data, or various kinds of channel data. If a current OFDM symbol in this subframe does not include any one of the following: service data, pilot data, synchronization channel data, broadcast channel data, and control channel data, it is determined that the current OFDM symbol carries no actual content, a transmitting channel that is corresponding to the current OFDM symbol in this subframe may be shut down, or power of the transmitting channel may be decreased. In this embodiment, the unit 1 may be located in a baseband subsystem.

Furthermore, when the unit 1 judges whether actual content is carried, a judgment criteria may further include judging based on other data or signaling. For example, the unit 1 judges whether some data or signaling that imposes a substantial impact on stable running of the system, and user access and use is carried, and such data or signaling may be used as a criteria for judging whether actual content is carried.

The unit 2 is configured to receive a judgment result of the unit 1, and when the judgment result is that the current OFDM symbol in the subframe in the LTE system carries no actual content, shut down the transmitting channel that is corresponding to the current OFDM symbol or decrease power of the transmitting channel. Furthermore, the unit 2 may be located in a baseband subsystem, or may be located in an intermediate-frequency radio-frequency subsystem.

Furthermore, the energy-saving system (for example, in another embodiment of the present invention) may further include a unit 3, which is configured to receive subframe data that is scheduled by a layer 2. Specifically, the unit 3 may be located in the baseband subsystem and through an interface between the layer 2 and the baseband subsystem, receives scheduled subframe data that is sent by a layer 2 subsystem.

Furthermore, the transmitting channel in this energy-saving system (for example, in another embodiment of the present invention) may include a power amplification unit, an inter-frequency unit, and a radio-frequency unit. The unit 2 may include a unit 21, which is configured to, according to the judgment result of the unit 1, shut down a power amplifier at the time corresponding to the symbol or decrease power of the power amplifier; the unit 2 may further include a unit 22, which is configured to, according to the judgment result of the unit 1, shut down an intermediate frequency at the time corresponding to the symbol or decrease power of the intermediate frequency part; and the unit 2 may further include a unit 23, which is configured to, according to the judgment result of the unit 1, shut down a radio frequency at the time corresponding to the symbol or decrease power of the radio frequency part. Definitely, the unit 2 may also include only any one or two of the following: the unit 21, the unit 22, and the unit 23.

With the energy-saving system provided in this embodiment of the present invention, an OFDM symbol that carries actual content is distinguished from an OFDM symbol that carries no content; for the OFDM symbol that carries no content, power of a transmitting channel at the time corresponding to the OFDM symbol is decreased, or the transmitting channel at the time corresponding to the OFDM symbol is shut down. In this way, energy consumption of a system may be saved.

The energy-saving system provided in this embodiment of the present invention is applicable to both an LTE FDD system and an LTE TDD system.

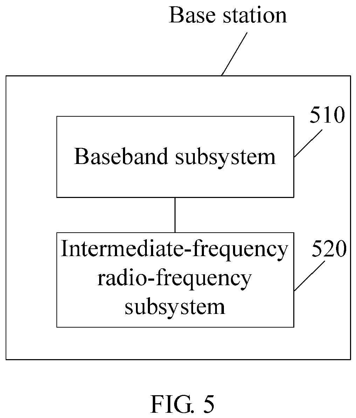

Another embodiment of the present invention provides a base station. In this embodiment, when no actual content is carried on an OFDM symbol in a subframe in an LTE system, the base station may shut down a transmitting channel that is corresponding to the OFDM symbol or decrease power of the transmitting channel that is corresponding to the OFDM symbol. As shown in FIG. 5, the base station includes a baseband subsystem 510 and an intermediate-frequency radio-frequency subsystem 520. The baseband subsystem 510 and the intermediate-frequency radio-frequency subsystem 520 can execute the steps of the method provided in the preceding method embodiments.

The steps of the method or algorithm described in the embodiments disclosed in the present invention may be implemented by hardware, a software unit executed by a processor, or a combination of the two. The software unit may be disposed in a random access memory (RAM), flash memory, read-only memory (ROM), electrically programmable ROM, electrically erasable programmable ROM, register, hard disk, removable disk, CD-ROM, or any other form of storage medium known in the art.

The preceding embodiments are only used for describing the technical solutions of the present invention, but shall not be construed as a limitation to the present invention. Persons of ordinary skill in the art should understand that although the present invention has been described in detail with reference to the preceding exemplary embodiments, various modifications and equivalent replacements may still be made to the technical solutions of the present invention, however, these modifications and equivalent replacements do not depart from the scope of the technical solutions of the present invention.

## Claims

1. An energy-saving method, comprising:
receiving (S201), by a baseband subsystem, a downlink subframe that is scheduled by a layer 2;
performing (S202), by the baseband subsystem, baseband processing on the downlink subframe;
shutting down or decreasing (S205, S304), by the baseband subsystem or by an intermediate-frequency radio-frequency subsystem, power of a transmitting channel corresponding to an Orthogonal Frequency Division Multiplex, OFDM, symbol when judging no actual content is carried on the OFDM symbol in the downlink subframe;
wherein the actual content comprises service data, pilot data and channel data.

2. The energy-saving method according to claim 1, wherein the channel data comprises at least one of following:
synchronization channel data, broadcast channel data, and control channel data.

3. The energy-saving method according to claim 1 or 2, wherein the baseband subsystem judges whether the OFDM symbol in the downlink subframe carries the actual content.

4. The energy-saving method according to any one of claims 1 to 3, wherein the shutting down the power of the transmitting channel corresponding to the OFDM symbol comprises shutting down any one or multiple items in the following:
a power amplifier at the time corresponding to the OFDM symbol,
an intermediate frequency at the time corresponding to the OFDM symbol, and
a radio frequency at the time corresponding to the OFDM symbol.

5. The energy-saving method according to any one of claims 1 to 3, wherein the decreasing the power of the transmitting channel corresponding to the OFDM symbol comprises decreasing any one or multiple items in the following:
power of a power amplifier at the time corresponding to the OFDM symbol,
power of an intermediate frequency at the time corresponding to the OFDM symbol, and
power of a radio frequency at the time corresponding to the OFDM symbol.

6. The energy-saving method according to any one of claims 1 to 5, wherein the method further comprises:
judging whether the transmitting channel corresponding to the OFDM symbol is shut down or not before shutting down or decreasing the power of the transmitting channel corresponding to the OFDM symbol.

7. An energy-saving apparatus, comprising:
a baseband subsystem comprising means for receiving a downlink subframe that is scheduled by a layer 2 and performing baseband processing on the downlink subframe; and
means for shutting down or decreasing power of a transmitting channel corresponding to an Orthogonal Frequency Division Multiplex, OFDM, symbol when judging no actual content is carried on the OFDM symbol in the downlink subframe wherein the means for shutting down or decreasing the power of the transmitting channel corresponding to the OFDM symbol are located in the baseband subsystem or in an intermediate-frequency radio-frequency subsystem;
wherein the actual content comprises service data, pilot data and channel data.

8. The energy-saving apparatus according to claim 7, wherein the channel data comprises at least one of following:
synchronization channel data, broadcast channel data, and control channel data.

9. The energy-saving apparatus according to claim 7 or 8, wherein the means for judging whether the OFDM symbol in the downlink subframe carries the actual content is located in the baseband subsystem.

10. The energy-saving apparatus according to any one of claims 7 to 9, wherein the means for shutting down or decreasing the power of the transmitting channel corresponding to the OFDM symbol is configured to shut down any one or multiple items in the following:
a power amplifier at the time corresponding to the symbol;
an intermediate frequency at the time corresponding to the OFDM symbol; and
a radio frequency at the time corresponding to the OFDM symbol.

11. The energy-saving apparatus according to any one of claims 7 to 9, wherein the means for shutting down or decreasing the power of the transmitting channel corresponding to the OFDM symbol is configured to decrease any one or multiple items in the following:
power of a power amplifier at the time corresponding to the OFDM symbol;
power of an intermediate frequency at the time corresponding to the OFDM symbol; and
power of a radio frequency at the time corresponding to the OFDM symbol.

12. The energy-saving apparatus according to any one of claims 7 to 11, further comprising:
means for judging whether the transmitting channel corresponding to the OFDM symbol is shut down or not before shutting down or decreasing the power of the transmitting channel corresponding to the OFDM symbol.

## Patentansprüche

1. Energiesparendes Verfahren, umfassend:
Empfangen (S201), durch ein Basisband-Subsystem, eines Abwärtsstrecken-Teilrahmens, der durch eine Schicht 2 geplant ist;
Durchführen (S202), durch das Basisband-Subsystem, einer Basisband-Verarbeitung an dem Abwärtsstrecken-Teilrahmen;
Abschalten oder Reduzieren (S205, S304), durch das Basisband-Subsystem oder durch ein Zwischenfrequenz-Hochfrequenz-Subsystem, der Leistung eines sendenden Kanals, welcher einem orthogonalen Frequenzmultiplex (orthogonal Frequency Division Multiplex, OFDM)-Symbol entspricht, wenn geurteilt wird, dass in dem OFDM-Symbol im Abwärtsstrecken-Teilrahmen kein tatsächlicher Inhalt übertragen wird;
wobei der tatsächliche Inhalt Dienstdaten, Pilotdaten und Kanaldaten umfasst.

2. Energiesparendes Verfahren gemäß Anspruch 1, wobei die Kanaldaten mindestens eines von Folgendem umfassen:
Synchronisationskanaldaten, Rundsendekanaldaten und Steuerkanaldaten.

3. Energiesparendes Verfahren gemäß Anspruch 1 oder 2, wobei das Basisband-Subsystem beurteilt, ob das OFDM-Symbol im Abwärtsstrecken-Teilrahmen tatsächlichen Inhalt überträgt.

4. Energiesparendes Verfahren gemäß einem der Ansprüche 1 bis 3, wobei das Abschalten der Leistung des sendenden Kanals, welcher dem OFDM-Symbol entspricht, umfasst, eine oder mehrere der folgenden Positionen abzuschalten:
einen Leistungsverstärker zum Zeitpunkt, der dem OFDM-Symbol entspricht,
eine Zwischenfrequenz zum Zeitpunkt, der dem OFDM-Symbol entspricht, und
eine Hochfrequenz zum Zeitpunkt, der dem OFDM-Symbol entspricht.

5. Energiesparendes Verfahren gemäß einem der Ansprüche 1 bis 3, wobei das Reduzieren der Leistung des sendenden Kanals, welcher dem OFDM-Symbol entspricht, umfasst, eine oder mehrere der folgenden Positionen zu reduzieren:
Leistung des Leistungsverstärkers zum Zeitpunkt, der dem OFDM-Symbol entspricht,
Leistung der Zwischenfrequenz zum Zeitpunkt, der dem OFDM-Symbol entspricht, und
Leistung der Hochfrequenz zum Zeitpunkt, der dem OFDM-Symbol entspricht.

6. Energiesparendes Verfahren gemäß einem der Ansprüche 1 bis 5, wobei das Verfahren ferner umfasst:
Beurteilen, ob der sendende Kanal, der dem OFDM-Symbol entspricht, abgeschaltet wird oder nicht, bevor die Leistung des sendenden Kanals, der dem OFDM-Symbol entspricht, abgeschaltet oder reduziert wird.

7. Energiesparendes Gerät, umfassend:
ein Basisband-Subsystem, umfassend
Mittel zum Empfangen eines Abwärtsstrecken-Teilrahmens, der durch eine Schicht 2 geplant ist, und Ausführen einer Basisband-Verarbeitung an dem Abwärtsstrecken-Teilrahmen; und
Mittel zum Abschalten oder Reduzieren der Leistung eines sendenden Kanals, der einem orthogonalen Frequenzmultiplex (Orthogonal Frequency Division Multiplex, OFDM) -Symbol entspricht, wenn geurteilt wird, dass in dem OFDM-Symbol im Abwärtsstrecken-Teilrahmen kein tatsächlicher Inhalt übertragen wird, wobei die Mittel zum Abschalten oder Reduzieren der Leistung des sendenden Kanals, der dem OFDM-Symbol entspricht, in dem Basisband-Subsystem oder in einem Zwischenfrequenz-Hochfrequenz-Subsystem enthalten sind;
wobei der tatsächliche Inhalt Dienstdaten, Pilotdaten und Kanaldaten umfasst.

8. Energiesparendes Gerät gemäß Anspruch 7, wobei die Kanaldaten mindestens eines von Folgendem umfassen:
Synchronisationskanaldaten, Rundsendekanaldaten und Steuerkanaldaten.

9. Energiesparendes Gerät gemäß Anspruch 7 oder 8, wobei die Mittel zum Beurteilen, ob das OFDM-Symbol im Abwärtsstrecken-Teilrahmen tatsächlichen Inhalt überträgt, in dem Basisband-Subsystem enthalten sind.

10. Energiesparendes Gerät gemäß einem der Ansprüche 7 bis 9, wobei das Mittel zum Abschalten oder Reduzieren der Leistung des sendenden Kanals, der dem OFDM-symbol entspricht, dafür ausgelegt ist, eine oder mehere der folgenden Positionen abzuschalten:
einen Leistungsverstärker zu dem Zeitpunkt, der dem Symbol entspricht;
einen Zwischenfrequenzteil zu dem Zeitpunkt, der dem OFDM-Symbol entspricht; oder
einen Hochfrequenzteil zu dem Zeitpunkt, der dem OFDM-Symbol entspricht.

11. Energiesparendes Gerät gemäß einem der Ansprüche 7 bis 9, wobei das Mittel zum Abschalten oder Reduzieren der Leistung des sendenden Kanals, der dem OFDM-Symbol entspricht, dafür ausgelegt ist, eine oder mehrere der folgenden Positionen zu reduzieren:
die Leistung eines Leistungsverstärkers zu dem Zeitpunkt, der dem OFDM-Symbol entspricht;
die Leistung eines Zwischenfrequenzteils zu dem Zeitpunkt, der dem OFDM-Symbol entspricht; oder
die Leistung eines Hochfrequenzteils zu dem Zeitpunkt, der dem OFDM-Symbol entspricht

12. Energiesparendes Gerät gemäß einem der Ansprüche 7 bis 11, ferner umfassend: Mittel zum Beurteilen, ob der sendende Kanal, der dem OFDM-Symbol entspricht, abgeschaltet wird oder nicht, bevor die Leistung des sendenden Kanals, der dem OFDM-Symbol entspricht, abgeschaltet oder reduziert wird.

## Revendications

1. Procédé d'économie d'énergie, comprenant :
la réception (S201), par un sous-système de bande de base, d'une sous-trame de liaison descendante qui est planifiée par une couche 2 ;
l'exécution (S202), par le sous-système de bande de base, d'un traitement de bande de base sur la sous-trame de liaison descendante ;
l'interruption ou la réduction (S205, S304), par le sous-système de bande de base ou par un sous-système de fréquence radio à fréquence intermédiaire, de la puissance d'un canal d'émission correspondant à un symbole de multiplexage par répartition orthogonale de fréquence, OFDM, lorsqu'il est jugé qu'aucun contenu effectif n'est transporté sur le symbole OFDM dans la sous-trame de liaison descendante ;
dans lequel le contenu effectif comprend des données de service, des données pilotes et des données de canaux.

2. Procédé d'économie d'énergie selon la revendication 1, dans lequel les données de canaux comprennent au moins l'un des éléments suivants :
des données de canaux de synchronisation, des données de canaux de diffusion et des données de canaux de commande.

3. Procédé d'économie d'énergie selon la revendication 1 ou 2, dans lequel le sous-système de bande de base juge si le symbole OFDM dans la sous-trame de liaison descendante transporte le contenu effectif.

4. Procédé d'économie d'énergie selon l'une quelconque des revendications 1 à 3, dans lequel l'interruption de la puissance du canal d'émission correspondant au symbole OFDM comprend l'interruption de l'un quelconque ou de multiples éléments parmi les suivants :
un amplificateur de puissance à l'instant correspondant au symbole OFDM,
une fréquence intermédiaire à l'instant correspondant au symbole OFDM, et
une fréquence radio à l'instant correspondant au symbole OFDM.

5. Procédé d'économie d'énergie selon l'une quelconque des revendications 1 à 3, dans lequel la réduction de la puissance du canal d'émission correspondant au symbole OFDM comprend la réduction de l'un quelconque ou de multiples éléments parmi les suivants :
la puissance d'un amplificateur de puissance à l'instant correspondant au symbole OFDM,
la puissance d'une fréquence intermédiaire à l'instant correspondant au symbole OFDM, et
la puissance d'une fréquence radio à l'instant correspondant au symbole OFDM.

6. Procédé d'économie d'énergie selon l'une quelconque des revendications 1 à 5, dans lequel le procédé comprend en outre :
le jugement du fait de savoir si le canal d'émission correspondant au symbole OFDM est ou non interrompu avant d'interrompre ou de réduire la puissance du canal d'émission correspondant au symbole OFDM.

7. Appareil d'économie d'énergie comprenant :
un sous-système de bande de base comprenant des moyens destinés à recevoir une sous-trame de liaison descendante qui est planifiée par une couche 2 et à exécuter un traitement de bande de base sur la sous-trame de liaison descendante ; et
des moyens destinés à interrompre ou réduire la puissance d'un canal d'émission correspondant à un symbole de multiplexage par répartition orthogonale de fréquence, OFDM, lorsqu'il est jugé qu'aucun contenu effectif n'est transporté sur le symbole OFDM dans la sous-trame de liaison descendante dans lequel les moyens destinés à interrompre ou réduire la puissance du canal d'émission correspondant au symbole OFDM sont situés dans le sous-système de bande de base ou dans un sous-système de fréquence radio à fréquence intermédiaire ;
dans lequel le contenu effectif comprend des données de service, des données pilotes et des données de canaux.

8. Appareil d'économie d'énergie selon la revendication 7, dans lequel les données de canaux comprennent au moins l'un des éléments suivants :
des données de canaux de synchronisation, des données de canaux de diffusion et des données de canaux de commande.

9. Appareil d'économie d'énergie selon la revendication 7 ou 8, dans lequel les moyens destinés à juger si le symbole OFDM dans la sous-trame de liaison descendante transporte le contenu effectif sont situés dans le sous-système de bande de base.

10. Appareil d'économie d'énergie selon l'une quelconque des revendications 7 à 9, dans lequel les moyens destinés à interrompre ou réduire la puissance du canal d'émission correspondant au symbole OFDM sont configurés pour interrompre l'un quelconque ou de multiples éléments parmi les suivants :
un amplificateur de puissance à l'instant correspondant au symbole,
une fréquence intermédiaire à l'instant correspondant au symbole OFDM, et
une fréquence radio à l'instant correspondant au symbole OFDM.

11. Appareil d'économie d'énergie selon l'une quelconque des revendications 7 à 9, dans lequel les moyens destinés à interrompre ou réduire la puissance du canal d'émission correspondant au symbole OFDM sont configurés pour réduire l'un quelconque ou de multiples éléments parmi les suivants :
la puissance d'un amplificateur de puissance à l'instant correspondant au symbole OFDM,
la puissance d'une fréquence intermédiaire à l'instant correspondant au symbole OFDM, et
la puissance d'une fréquence radio à l'instant correspondant au symbole OFDM.

12. Appareil d'économie d'énergie selon l'une quelconque des revendications 7 à 11, comprenant en outre :
des moyens destinés à juger si le canal d'émission correspondant au symbole OFDM est ou non interrompu avant d'interrompre ou de réduire la puissance du canal d'émission correspondant au symbole OFDM.
